Europäisches Patentamt

European Patent Office

Office européen des brevets

(19)

(11) **EP 0 720 028 B1**

(12) **FASCICULE DE BREVET EUROPEEN**

(45) Date de publication et mention
de la délivrance du brevet:
**28.06.2000 Bulletin 2000/26**

(51) Int Cl.[7]: **G01S 17/32**

(21) Numéro de dépôt: **95402871.8**

(22) Date de dépôt: **19.12.1995**

(54) **Télémètre discret multifonctionnel**

Multifunktionelles, unauffälliges Entfernungsmessgerät

Multifunctional, inconspicuous distance measuring apparatus

(84) Etats contractants désignés:
**DE GB IT**

(30) Priorité: **30.12.1994 FR 9415944**

(43) Date de publication de la demande:
**03.07.1996 Bulletin 1996/27**

(73) Titulaire: **THOMSON-CSF**
**75008 Paris (FR)**

(72) Inventeurs:
 • **Defour, Martin**
  **F-92402 Courbevoie Cedex (FR)**
 • **Couderc, Georges**
  **F-92402 Courbevoie Cedex (FR)**
 • **Thibout, Paul**
  **F-92402 Courbevoie Cedex (FR)**

(74) Mandataire: **Lincot, Georges et al**
 **Thomson-CSF Propriété Intellectuelle,**
 **Département Brevets,**
 **13, Avenue du Président Salvador Allende**
 **94117 Arcueil Cédex (FR)**

(56) Documents cités:
 **US-A- 4 690 551      US-A- 4 721 385**
 **US-A- 4 846 571      US-A- 4 856 893**
 **US-A- 5 164 784      US-A- 5 237 331**

 • **CONFERENCE PROCEEDINGS MICROWAVES
 88, Juillet 1988, WEMBLEY CONFERENCE
 CENTRE LONDON GB, pages 108-113,
 XP000195929 W. ALEXANDER ET AL: "A FMCW
 CO2 laser radar"**

## Description

La présente invention concerne le domaine de la télémétrie, c'est-à-dire de la détermination de la distance d'un objet à une position de référence où se trouve la station de mesure. Cette détermination est une connaissance préalable à de nombreuses applications: communication, conduite de tir, photographie,... . L'invention s'applique plus particulièrement à l'acquisition de cibles mobiles, par la mesure de leur distance et de leur vitesse de déplacement relatif. Elle s'applique également à l'anémométrie, par l'acquisition de la vitesse de déplacement des masses d'air environnant la station de référence. D'où le caractère multifonctionnel du télémètre selon l'invention.

La plupart des dispositifs de télémétrie existants sont réalisés sur le principe de la mesure du temps de vol d'une impulsion, par exemple de source laser, émise par la station de référence et rétrodiffusée, par la cible, vers la position de référence où l'impulsion est détectée. On utilise habituellement une source laser solide YAG (Grenat d'argent et d'yttrium) émettant dans le proche infrarouge (par exemple à 1,06 μm ou 1,5 μm en association avec un oscillateur paramagnétique optique) et, à la réception, un détecteur qui ne nécessite pas de refroidissement au vu de la bande spectrale utilisée.

Cependant, un inconvénient majeur de ce type de détection réside dans le fait qu'il emploie des impulsions lumineuses brèves (de l'ordre de 20 ns) qui sont aisément détectées par des dispositifs d'alerte laser (en abrégé DAL). Un DAL permet en effet de détecter dans son champ d'observation les points lumineux dont l'intensité varie rapidement en comparaison des variations temporelles habituellement détectées dans une scène.

Pour remédier à ce problème, il est connu d'utiliser la technique de la détection hétérodyne d'un flux laser continu émis par la station de référence, rétrodiffusé par la cible et détecté en retour par la station dé référence, à travers un système optique adapté. La télémétrie à détection hétérodyne consiste à superposer, au niveau de la station de référence, un flux laser de référence au flux de mesure rétroréfléchi par la cible. Le flux de référence est un oscillateur local qui possède une fréquence identique à celle du flux émis. Les deux flux interfèrent par projection optique sur un détecteur, de type photodiode, qui délivre un signal de battement. L'analyse du signal obtenu permet de déduire à partir de la fréquence du battement, la distance cible-référence ainsi que sa vitesse radiale relative.

Un tel dispositif de télémètre est connu du brevet US-A-4 846 571.

Toutefois, ce principe de détection présente plusieurs inconvénients majeurs. Le premier est la forte sensibilité aux turbulences atmosphériques qui perturbent la détection du signal. Il devient alors difficile, voire impossible, de déduire une valeur de fréquence de battement à partir de l'analyse du signal obtenu. Pour réduire cette influence ainsi que celle des aberrations des éléments optiques utilisés, il est nécessaire de réduire le diamètre de la pupille d'entrée du télémètre.

Un autre inconvénient est la contrainte d'alignement entre la direction du flux de mesure provenant de la cible et la direction du flux oscillateur local. Cette contrainte résulte de la loi d'antenne qui limite la variation directionnelle à un champ angulaire d'ouverture θ proportionnelle à $\frac{\lambda}{D}$, λ étant la longueur d'onde du flux de mesure et D le diamètre de la pupille de réception. Pour augmenter l'ouverture du champ, il faut soit augmenter la valeur de longueur d'onde soit diminuer celle de la pupille de réception. Cela nécessite l'utilisation d'une source laser infrarouge de longueur d'onde, du type $CO_2$ (qui émet à 10,6 μm) et d'un détecteur refroidi à basse température (généralement 77°K) pour que, dans un champ donné, la pupille soit maximale. De plus, l'albédo d'une cible peut être faible à 10,6 μm, en particulier lorsque la cible est mouillée. D'autre part, une diminution trop importante du diamètre D limite la détection des flux qui présentent des fronts d'ondes de profils variés, du fait de leur sensibilité aux turbulences.

Un autre inconvénient provient du fait qu'une émission laser continue impose l'utilisation de voies d'émission et de réception séparées pour échapper aux réflexions parasites sur les éléments optiques et les aérosols. Cette contrainte limite le diamètre de la pupille de réception.

La présente invention vise à résoudre les problèmes liés à la détection hétérodyne, en particulier la limitation du champ par la loi d'antenne et la sensibilité aux turbulences et aux aberrations optiques.

Pour atteindre ces objectifs, la présente invention propose de réaliser l'oscillateur local par diffraction d'un flux de pompe sur un réseau d'indices créé dans un milieu non linéaire entre le flux de mesure rétrodiffusé par la cible et le flux de pompe. De cette façon, l'oscillateur reproduit, à la fréquence du flux de pompe, les variations du front d'ondes du flux de mesure. Dans ces conditions, un repère fréquentiel introduit dans le flux de visée, par exemple sous la forme d'une rampe en fréquence, peut être détecté à la réception de façon précise dans le temps, par interférence entre le flux de mesure et l'oscillateur local, lorsque certaines conditions entre les fréquences des flux de mesure et de pompe sont remplies; une mesure fine de distance par chronométrie peut alors être réalisée.

Plus précisément, l'invention a pour objet un télémètre discret multifonctionnel, comprenant une source laser émettant en continu un faisceau à une fréquence fondamentale $f_0$ pour réaliser un oscillateur local et un détecteur, dans lequel le faisceau émis est séparé pour former, d'une part, un faisceau de visée dirigé vers une cible située à une distance à déterminer et, d'autre part, un faisceau de pompe, caractérisé en ce que ledit faisceau de pompe est dirigé vers une cellule à milieu non-linéaire présentant une constante de temps τ, en ce que le faisceau de visée est modulée en fréquence par introduction à un instant donné, à l'aide d'un module acousto-optique, d'une composante additionnelle de fréquence périodique $\delta f_1$. présentant une durée sensiblement inférieure à la constante de temps $\tau$ et un temps de relaxation supérieur à la constante de temps $\tau$, le faisceau de visée étant rétrodiffusé par la cible et dirigé sous la forme d'un faisceau de mesure vers la cellule à milieu non-linéaire, en ce que les fréquences du faiceau de pompe et de visée sont réglées l'une relativement à l'autre par au moins un module acousto-optique de sorte qu'un réseau d'indice mobile est photo-induit dans le milieu non-linéaire, en ce que le faisceau de pompe diffracte sur ce réseau d'indice pour générer le faisceau oscillateur local qui interfère avec le faisceau de mesure sur le détecteur pour délivrer, à un instant séparé de l'instant d'émission de la composante de modulation par une durée proportionnelle à la distance de la cible, un signal de battement de fréquence $\delta f_1$. égale à la fréquence de modulation.

Le télémètre selon l'invention présente l'avantage d'être non seulement discret, du fait de l'utilisation d'une illumination laser continue, mais également de présenter une compensation dynamique des turbulences et un découplage du flux provenant de la cible et des flux parasites rétrodiffusés par les aérosols ou les éléments optiques du système de détection, du fait de l'identité des variations de fronts d'ondes entre l'oscillateur local et le faisceau de mesure reçu, quelle que soit la direction relative de ce faisceau par rapport à celle du faisceau de pompe signal ou la valeur du diamètre de la pupille de réception.

Selon un mode de réalisation particulier, le faisceau de pompe est modulé en fréquence par introduction d'une composante de fréquence variable et de durée sensiblement inférieure au temps de réponse du cristal non-linéaire, par le modulateur de fréquence, par exemple un module acousto-optique. Le réseau d'indice qui fournit l'information de distance et de vitesse est alors directement obtenu sans décalage de fréquences.

Selon un autre mode de réalisation, une composante impulsionnelle périodique est introduite sur le faisceau de pompe à l'aide d'un amplificateur optique. Cette composante est séquencée de telle façon que la fréquence du faisceau de mesure se trouve nécessairement calée entre deux raies du spectre des harmoniques de la composante impulsionnelle. Le réseau d'indice qui fournit l'information de distance et de vitesse est là encore directement obtenu, avec une détection final de signal présentant un rapport signal/bruit particulièrement avantageux.

Selon des caractéristiques particulières, la composante variable de la modulation du flux de visée se présente sous la forme d'une rampe linéaire périodiquement émise par un module acousto-optique, ou sous la forme d'une double rampe de pentes opposées. D'autre part le traitement du signal au sortir du détecteur peut être réalisé par compression à l'aide de lignes à retard dispersives puis post-intégration.

D'autres caractéristiques et avantages de l'invention apparaîtront à la lecture de la description qui suit, accompagnée des figures annexées qui représentent respectivement :

- la figure 1, une vue schématique d'un exemple de réalisation d'un télémètre selon l'invention ;
- la figure 2, des diagrammes représentatifs d'une rampe en fréquence périodique pouvant être utilisée pour moduler le faisceau de visée émis par le télémètre selon l'invention, et du signal impulsionnel obtenu en sortie du détecteur;
- la figure 3, un autre exemple de réalisation d'une partie du télémètre selon l'invention, illustrant un mode particulier de mise en oeuvre ;
- la figure 4, le diagramme d'une composante impulsionnelle de modulation du faisceau de pompe utilisée en liaison avec ce mode de réalisation particulier;
- la figure 5, les transformées de Fourier du faisceau de pompe et du faisceau de mesure dans le cadre de ce mode de réalisation.

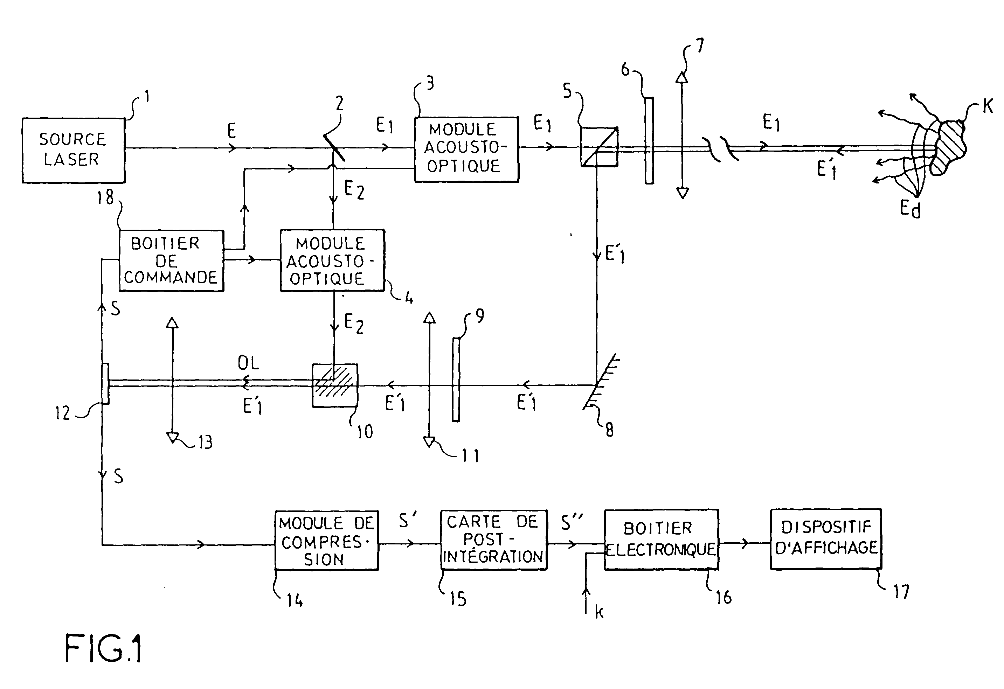

Un exemple de réalisation d'un télémètre selon l'invention, tel qu'illustré par la figure 1 comporte une source laser 1 de type Erbium ($Er^{3+}$) qui émet en continu un faisceau E polarisé verticalement de fréquence ondamentale $f_0$, correspondant à la longueur d'onde 1,54 µm de sécurité oculaire. Les faisceaux lumineux sont représentés sur les figures par leur axe optique afin de ne pas les charger excessivement.

Le faisceau E, de puissance P (par exemple égale à 50 mW) est séparé spatialement en deux faisceaux, $E_1$ et $E_2$, dits respectivement de visée et de pompe, de puissance $P_1$ et $P_2$ (respectivement égales à 40 mW et 10 mW dans l'exemple illustré), par transmission et réflexion sur une lame partiellement réfléchissante 2. Les faisceaux $E_1$ et $E_2$ traversent respectivement un module acousto-optique, 3 et 4, chaque module étant composé d'un couple de cellules acousto-optiques. Le module acousto-optique 3 peut translater la fréquence fondamentale $f_0$ du faisceau de visée $E_1$ dirigé vers la cible K dont on cherche à déterminer la distance, et le module acousto-optique 4 peut translater la fréquence fondamentale $f_0$ du faisceau de pompe $E_2$.

Afin de séparer l'émission du faisceau de visée $E_1$ vers la cible K de la réception de ce faisceau rétroréfléchi par la cible, le faisceau $E_1$ peut traverser à l'émission, comme illustré à titre d'exemple sur la figure, un cube de polarisation 5 qui transmet la polarisation verticale et réfléchit la polarisation horizontale. Le faisceau transmis est ensuite transformé en polarisation circulaire, par exemple circulaire droite, par une lame quart d'onde 6 et collimaté par un élément optique représenté par la lentille 7. Le faisceau de visée $E_1$ se propage alors dans l'espace libre, puis est diffusé par la cible K sous forme de différents faisceaux $E_d$ formant un flux diffusé. Le flux ainsi diffusé par la cible est de polarisation circulaire inversée (circulaire gauche dans l'exemple de réalisation) et présente un décalage de fréquence Doppler, $f_D$, si la cible K est mobile. Typiquement, si le flux lumineux est à la longueur d'onde 1,5 μm, le décalage Doppler en fréquence vaut 1,34 MHz/m/s. La partie $E'_1$ du flux $E_d$ qui est diffusée en direction du télémètre, est collectée par la lentille 7 par retour inverse de la lumière. Le flux $E'_1$ est dit rétrodiffusé vers le télémètre.

Le faisceau $E_2$, provenant directement de la source laser 1, et le flux $E'_1$, rétroréfléchi par la cible K, sont dirigés vers une cellule 10 contenant un milieu non-linéaire optique pour y générer des réseaux d'interférences. Le flux rétrodiffusé $E'_1$ est amené jusqu'à la cellule 10 par tout moyen optique adapté. Dans l'exemple de réalisation illustré, le flux $E'_1$ est d'abord transformé en polarisation horizontale par traversée de la lame quart d'onde 6, pour pouvoir être réfléchi par le cube séparateur de polarisation 5 et être séparé du faisceau d'émission $E_1$. Le flux $E'_1$ est ensuite réfléchi sur un miroir orientable 8, avant de traverser, dans l'exemple illustré, un filtre interférentiel 9 centré sur la longueur d'onde d'émission de la source laser 10 (1,5 μm dans l'exemple de réalisation). En sortie du filtre, le flux $E'_1$ obtenu est un faisceau apte à servir de faisceau de mesure, et est appelé ainsi dans la suite du traitement. Il est alors focalisé par une lentille 11 sur le milieu non linéaire de la cellule 10, selon un angle d'incidence défini par l'orientation du miroir 8. La valeur de cette angle d'incidence est fonction du matériau non-linéaire utilisé, en particulier en fonction de sa constante de temps de réponse τ. Comme matériau non linéaire, il est par exemple possible d'utiliser un cristal de Cd-Te (cadmium-tellure), de GaAs (arséniure de gallium), ou de $BaTiO_3$ (titanate de barium).

Le faisceau $E_2$, qui sert de faisceau de pompe pour le milieu non-linéaire, et le faisceau de mesure $E'_1$ génèrent alors des réseaux d'interférence qui se déplacent à des vitesses proportionnelles à la différence entre chacune des fréquences d'un faisceau et des fréquences de l'autre faisceau interférant. Les faisceaux sont réglés en fréquence par l'un et/ou l'autre des modules acousto-optiques 3 et 4 (selon des conditions définies ci-après) de sorte qu'un réseau d'interférence génère, dans le milieu non-linéaire, un réseau d'indices photo-induit dont la vitesse de déplacement est proportionnelle à la différence entre les fréquences interférantes.

Si les conditions relatives aux fréquences sont remplies, la diffraction du faisceau de pompe $E_2$ sur ce réseau d'indice génère un faisceau OL qui a même front d'onde que le faisceau de mesure $E'_1$, puisque les déformations de front d'onde sont inscrits par construction dans le réseau d'indice. Le faisceau OL ainsi créé est un oscillateur local qui permet de réaliser une compensation dynamique des turbulences atmosphériques et des aberrations optiques subies par le faisceau de mesure de la cible au cours de son trajet aller-retour.

Le faisceau oscillateur local OL et le faisceau de mesure $E'_1$ sont projetés sur un détecteur 12, de type photodiode, à l'aide d'une lentille 13. Si les conditions de réglage de fréquences sont remplies, le détecteur 12 délivre un signal de battement S de fréquence égale à la différence entre les fréquences des faisceaux OL et $E'_1$ qui interfèrent sur ce détecteur.

Avant de décrire le traitement qui peut être effectué sur le signal de battement S, examinons les conditions à respecter sur les fréquences des faisceaux interférants afin d'obtenir un signal de battement dont la fréquence varie selon un profil prédéterminé. Ce profil est celui de la fréquence $\delta f_1$ périodiquement variable d'une composante de modulation ajoutée au faisceau de visée $E_1$. Une telle composante est fournie par le module acousto-optique 3. Une composante continue en fréquence, respectivement $\Delta f_1$ et/ou $\Delta f_2$, est également ajoutée sur, respectivement, le faisceau de visée $E_1$ et/ou le faisceau de pompe $E_2$. Tous ces décalages sont mis en oeuvre par les modules acousto-optiques, respectivement 3 et 4, en addition à la fréquence fondamentale $f_0$ des faisceaux de visée $E_1$ et de pompe $E_2$, telle que délivrée par la source laser 1.

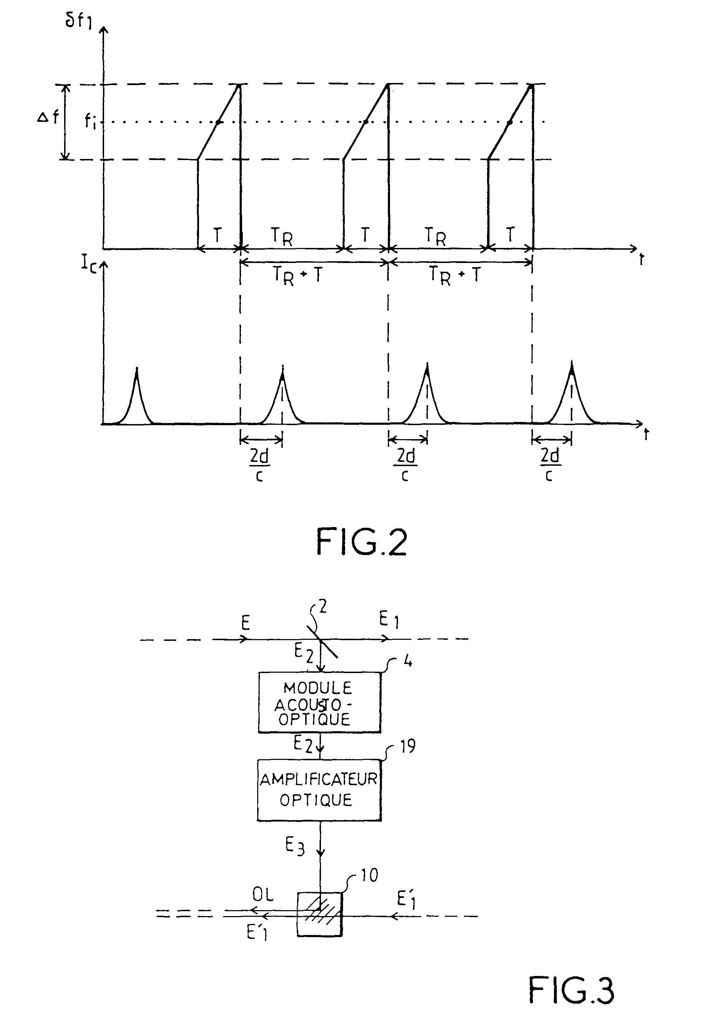

Par exemple, la fréquence de modulation $\delta f_1$ peut se présenter sous la forme d'une rampe périodiquement renouvelée, telle qu'illustrée en fonction du temps t à la figure 2. Chaque rampe possède une durée d'excursion T et un intervalle d'excursion en fréquence $\Delta f$ centrée autour d'une fréquence $f_i$; la modulation est globalement périodique, de période égale à $T + T_R$, composée de la période d'excursion T et d'une période de relaxation égale à $T_R$. La mise en oeuvre d'autres types de profil périodique pour la fréquence de modulation peut être effectuée par l'homme du métier, par exemple un profil de type "impulsionnel" correspondant à une rampe périodique horizontale ($\Delta f = 0$).

Dans ces conditions, les réseaux d'interférence générés dans le milieu non-linéaire de la cellule 10 par le faisceau $E_2$, de fréquence $f_0 + \Delta f_2$, et le flux rétroréfléchi $E'_1$, de fréquence $f_0 + \Delta f_1 + \delta f_1 + f_D$, $f_D$ étant le décalage en fréquence Doppler dû à la mobilité de la cible, se déplacent à des vitesses proportionnelles à la différence de ces fréquences, soit $\Delta f_1 - \Delta f_2 + \delta f_1 + f_D$. En choisissant les composantes continues ($\Delta f_1$ et $\Delta f_2$) des fréquences de réglage des faisceaux $E_1$ et $E_2$, les périodes $T_R$ et T de la composante périodiquement variable $\delta f_1$, et le temps de réponse τ du matériau non-linéaire utilisé de sorte que les trois relations suivantes soient satisfaites :

$$\left| \Delta f_1 - \Delta f_2 + f_D \right| < \frac{1}{\tau} \qquad (1)$$

$$T \ll \tau \qquad (2)$$

$$T_R > \tau \qquad (3)$$

le réseau d'interférence ainsi réalisé génère dans le matériau non-linéaire un réseau d'indice photo-induit mobile. Ce réseau d'indice se déplace à une vitesse proportionnelle à $\Delta f_1 - \Delta f_2 + f_D$. Cette quantité est égale à la différence des fréquences des faisceaux interférants, sans faire intervenir la composante périodiquement variable $\delta f_1$ puisque, selon la relation (2) précédente, la durée d'excursion T reste très inférieur à $\tau$.

L'oscillateur local OL, crée par diffraction du faisceau de pompe $E_2$, possède une fréquence égale à celle du faisceau de pompe $E_2$, soit $f_0 + \Delta f_2$, augmentée de la fréquence Doppler $\Delta f_1 + f_D - \Delta f_2$ due à la mobilité du réseau d'indice.

Finalement, il apparaît au niveau du détecteur 12 un signal de battement S modulé précisément à la fréquence variable de modulation $\delta f_1$; en effet, la fréquence du signal S est égale à la différence entre la fréquence du faisceau OL, soit $f_0 + \Delta f_1 + f_D$, et la fréquence du faisceau $E'_1$, soit $f_0 + \Delta f_1 + f_D + \delta f_1$; la fréquence de battement a donc une durée T et une période égale à $T + T_R$. L'impulsion électronique obtenue en réception au niveau du détecteur possède ainsi une fréquence de modulation variant linéairement dans le temps. Si $T_0$ est l'instant d'émission initial de la composante variable $\delta f_1$, celle-ci traverse le milieu non linéaire après rétroréflexion sur la cible, à l'instant $T_0 + \frac{2d}{c}$, où c est la vitesse de la lumière et d la distance entre le télémètre et la cible.

Au sortir du détecteur, le signal de battement S, de fréquence égale à la composante variable $\delta f_1$, est traité de manière à fournir la valeur de la distance d. Dans l'exemple de réalisation tel qu'illustré à la figure 1, le signal S délivré par le détecteur 12 est comprimé par transmission à un module de compression 14, par exemple un module à lignes à retard dispersives. Ce type de module de compression est connu de l'homme de l'art. Il utilise la propagation sur un substrat (classiquement en $LiNbO_3$) d'ondes acoustiques de surface créées à partir du signal S par un système piézo-électrique. Ces ondes se réfléchissent alors sélectivement, en fonction de leur fréquence, sur un réseau semi-réfléchissant de pas variable, cette réflexion permettant de compenser les retards. Par exemple, dans le cas où la fréquence du signal de battement se présente sous la forme d'une rampe de pente positive, telle qu'illustrée par la figure 2, les composantes de fréquences plus élevées, reçues les premières, sont retardées de façon à sortir en même temps que les fréquences les plus basses, reçues ultérieurement. Pour ce faire, les réseaux ont un pas variable adapté, de sorte que la loi de compression du retard en fonction de la fréquence soit conjugué par rapport à la loi d'émission, la loi de compression étant linéaire de pente négative lorsque la loi d'émission est, comme dans le cas présent, linéaire et de pente positive.

En détection hétérodyne classique, il apparaît une ambiguïté entre la détermination de la distance et celle de la vitesse de la cible, bien connue des spécialistes du radar. Cette ambiguïté est levée par l'utilisation de deux impulsions modulées accolées, et présentant des caractéristiques de pentes opposées. Les impulsions comprimées correspondantes s'écartent alors symétriquement en présence de l'effet Doppler, la vitesse pouvant alors se mesurer par l'écart entre les deux impulsions. Avec le télémètre selon l'invention, cette ambiguïté n'existe pas puisque l'oscillateur local est accordé en front d'onde et en fréquence au faisceau rétroréfléchi par la cible. La distance à la cible se déduit alors par simple chronométrie du temps d'arrivée de la composante impulsionnelle comprimée.

Sur la figure 2, un diagramme fréquence/ temps des composantes impulsionnelles comprimées, $I_c$, a été représenté au regard de la caractéristique d'émission de la composante variable $\delta f_1$. L'écart temporel entre l'instant de fin d'émission de chaque rampe et l'instant d'apparition de l'impulsion comprimée $I_c$ est égal à $\frac{2d}{c}$ et permet donc de mesurer la distance d.

Afin d'augmenter le rapport signal/bruit, il est possible de monter en sortie du module de compression 14, une carte de traitement 15 pour réaliser une post-intégration des impulsions comprimées qui sont délivrées à la cadence $\frac{1}{T_R + T}$. Un boîtier électronique 16, monté en sortie de la carte de post-intégration 15, reçoit alors le signal de battement, devenu S' après compression puis S" après post-intégration, le compare à un seuil k, et effectue la chronométrie. Le résultat de cette chronométrie peut être transmis à un dispositif d'affichage 17.

Dans la pratique, il y a détection lorsque la relation (1) est réalisée, c'est-à-dire lorsque les décalages fréquentiels des faisceaux $E_1$ et $E_2$ sont correctement ajustés au niveau des modules acousto-optiques, respectivement 3 et 4 (figure 1). Dans ces conditions, la valeur de la fréquence Doppler $f_D$ se déduit alors des valeurs de décalage fréquentiels $\Delta f_1$ et $\Delta f_2$ à partir de la relation (1) précédente:

$$f_D = \Delta f_2 - \Delta f_1 \qquad \text{à} \pm \frac{1}{\tau} \text{ près}$$

La vitesse de la cible s'en déduit aisément en sachant que, comme indiqué plus haut, le décalage en fréquence Doppler vaut approximativement 1,34 MHz/ m/s pour un faisceau de longueur d'onde égal à 1,5 $\mu$m.

Le réglage des composantes additionnelles peut être effectué au niveau des modules acousto-optiques 3 et 4 est effectué à l'aide d'un boîtier de commande 18, tel qu'illustré à la figure 1. En l'absence de détection de signal au niveau du détecteur 12, le signal électrique S est transmis au boîtier de commande 18 pour translater l'une et/ou l'autre des composantes constantes, $\Delta f_1$ et/ou $\Delta f_2$, à l'aide de décalages en fréquences effectuées au niveau des modules acousto-optiques 3 et/ou 4. Si $\Delta V$ représente le domaine de vitesse de la cible, le domaine de recherche en fréquence Doppler s'étend sur une plage proportionnelle à $\frac{\Delta V}{\lambda}$, $\lambda$ étant la

longueur d'onde du faisceau incident. En utilisant la relation d'application pratique précédente, donnant la valeur du décalage en fréquence Doppler par unité de vitesse de déplacement à la longueur d'onde d'illumination égale à 1,5 µm, cette plage s'étend sur approximativement $2 \times \frac{\Delta V}{\lambda}$ MHz. Si, par exemple, les modules acousto-optiques translatent les composantes constantes par pas élémrntaire égal à $\frac{1}{\tau}$, dans un sens positif ou négatif, le temps maximum de recherche et d'accrochage de cible (donc de détection) $T_{max}$ peut alors être donné par une relation pratique du type suivant (en sachant que par décalage élémentaire de fréquence, il s'écoule au moins le temps de création $\tau$ du réseau d'indice) :

$$T_{max} = \tau^2 \times 2 \times \frac{\Delta V}{\lambda}$$

Par exemple, pour un faisceau incident de longueur d'onde 1,5 µm et une plage de vitesse de cible égale à 20 m/s, le temps $T_{max}$ vaut 26,7 s pour un matériau non linéaire de constante de temps $\tau$ égal à 1 ms et vaut 0,26 s pour un matériau non linéaire de constante de temps égale à 0,1 ms.

Ces temps maximum de recherche et d'accrochage sont faibles. Une forme de réalisation plus particulière, ci-après décrite, permet d'obtenir directement, et donc encore plus rapidement, les informations de distance et de vitesse de cible recherchées. Selon cette forme de réalisation, une composante de fréquence $\delta f_2$, rapidement variable au regard de la constante de temps $\tau$, est introduite par l'intermédiaire du module acousto-optique 4 (figure 1). Cette excursion en fréquence supplémentaire est réglée pour apparaître pendant la période de relaxation $T_R$ de la composante variable introduite sur le faisceau $E_1$ par l'intermédiaire du module acousto-optique 3. Dans ces conditions, seul le réseau d'interférence créé lorsque la fréquence du faisceau de mesure $E'_1$ appartient au domaine de fréquence balayé par le faisceau de pompe $E_2$, à savoir $f_0 + \Delta f_2 \pm \frac{\delta f_2}{2}$, permet de photoinduire un réseau indice. L'introduction de cette composante supplémentaire de fréquence $\delta f_2$ permet donc de créer un seul réseau d'indice fixe à partir d'un des nombreux réseaux d'interférence, au lieu de la création d'un réseau d'indice mobile à partir d'un seul réseau d'interférence comme dans la forme de réalisation précédente.

Dans ces conditions, la diffraction du réseau de pompe $E_2$, après la période d'inscription $T_R$, sur le réseau d'indice ainsi créé génère un faisceau diffracté OL à la fréquence $f_0 + \Delta f_2$, puisque le réseau d'indice est fixe et que la fréquence $\delta f_2$ qui a, par hypothèse, une durée très inférieure à $\tau$, n'est pas inscrite dans le réseau. Il apparaît alors au niveau du détecteur un signal S modulé à la fréquence de battement $\Delta f_1 - \Delta f_2 + f_D + \delta f_1$. En réalisant, comme évoqué précédemment, une modulation de fréquence $\delta f_1$ doublée, à pente positive puis à pente négative, le module de compression 14 délivre deux signaux comprimés. L'écart temporel séparant ces signaux donne accès à la valeur de la porteuse $\Delta f_1 - \Delta f_2 + f_D$. Cette quantité fournit la valeur de la vitesse de la cible, et la position temporelle moyenne entre les deux signaux fournit la distance de la cible. Dans ces conditions, le temps maximum $T_{max}$ de recherche est divisé par la largeur d'excursion en fréquence additionnelle $\delta f_2$. Par exemple si $\delta f_2$ vaut 100 kHz, le temps $T_{max}$ est divisé par 100.

Un autre mode particulier de réalisation permet d'obtenir le même type d'effet avec l'insertion d'un amplificateur optique. La figure 3 illustre cette insertion en reprenant partiellement le schéma de la figure 1 où les références indiquées correspondent aux mêmes éléments que ceux de la figure 1. L'amplificateur 19, tel qu'une Cavité Amplificatrice Optique connue de l'homme de l'art, est intercalé entre le module acousto-optique 4 et la cellule de milieu non-linéaire 10. Cette cavité amplificatrice permet d'ajouter au faisceau de base $E_2$, de fréquence $f_0 + \Delta f_2$, une composante impulsionnelle en amplitude de puissance moyenne $\bar{P}$. Le faisceau délivré est noté $E_3$ sur la figure 3.

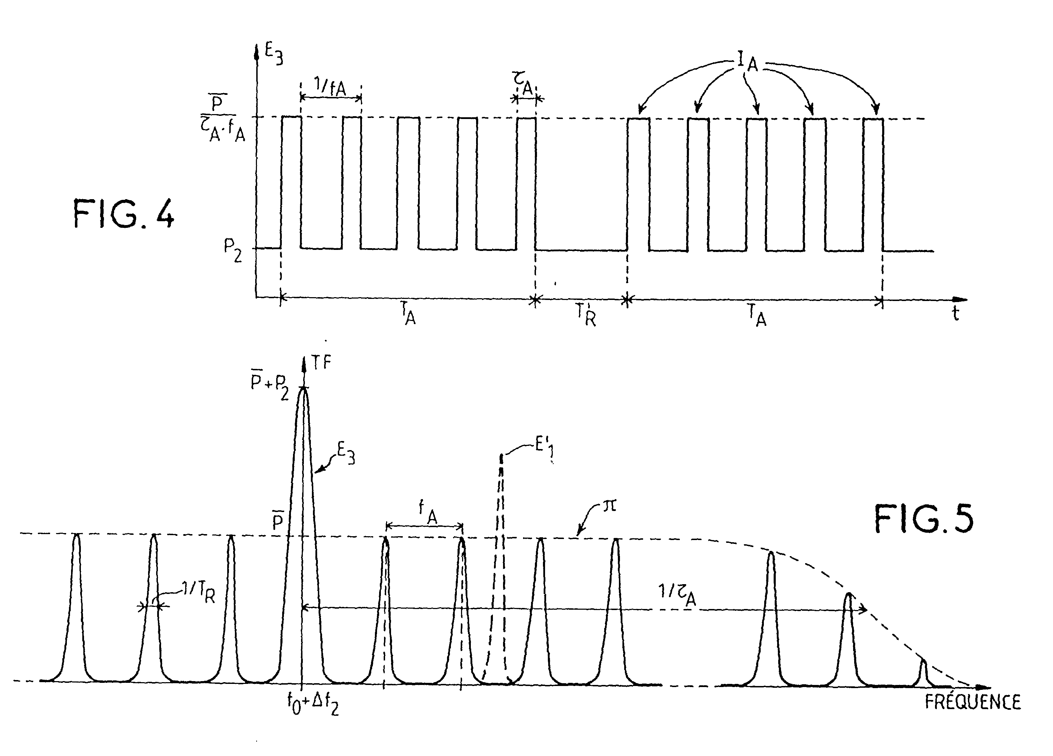

Le diagramme illustré à la figure 4 montre l'allure de la puissance du faisceau $E_3$ obtenu en sortie de la cavité amplificatrice, en fonction du temps t. L'amplification est créée pendant une durée $T_A$, puis relaxé pendant un temps $T'_R$ où seul le faisceau de pompe de base de puissance $P_2$ existe. Pendant la durée $T_A$, l'amplification est créée sous forme d'impulsions $I_A$ de durée $\tau_A$. Les impulsions $I_A$ sont délivrées à la cadence $f_A$. En termes de puissance, le faisceau $E_3$ délivré par la cavité amplificatrice possède une puissance impulsionnelle crête égale à $P_2 + \frac{\bar{P}}{\tau_A \times f_A}$, et une puissance continue égale à $P_2$.

Le faisceau de pompe $E_3$ issu de l'amplificateur optique 19 et le flux rétroréfléchi $E'_1$ génèrent des réseaux d'interférence dans le milieu non-linéaire de la cellule 10. Illustrées à la figure 5, les transformées de Fourier TF des faisceaux $E_3$ et $E'_1$ ( en unité de puissance) forment d'une part, pour le faisceau $E_3$, un signal de fréquence fondamentale donnée par la fréquence $f_0 + \Delta f_2$ de l'oscillateur de base $E_2$ de puissance $\bar{P} + P_2$ et des harmoniques d'écart fréquentiel égal à $f_A$, s'étalant sur une enveloppe $\Pi$ de largeur égal à $\pm \frac{1}{\tau_A}$ et de puissance crête $\bar{P}$. Du fait de la largeur du domaine fréquentiel $\frac{1}{\tau_A}$ concerné (par exemple $2.10^5$ harmoniques peuvent être comprises dans le domaine fréquentiel $\frac{1}{\tau_A}$ en utilisant des durées impulsionnelles habituelles), la raie du faisceau $E'_1$ de fréquence $f_0 + \Delta f_1 + f_D$, se trouve entre deux harmoniques du spectre de fréquence du faisceau $E_3$.

A condition que la cadence $f_A$ de la composante impulsionnelle du faisceau $E_3$ soit inférieure à $\frac{1}{\tau}$ ($\tau$ étant la constante de temps du milieu non-linéaire utilisé), il existe alors une raie du spectre de fréquence du faisceau $E_3$ dont l'interférence avec le flux $E'_1$ créé un réseau se déplaçant à une vitesse proportionnelle à une valeur inférieure à $\frac{1}{\tau}$. Le réseau d'indice photo-induit par ce réseau d'interférence durant la période d'inscription de durée $T_A$, diffracte la composante continue de fréquence $f_0 + \Delta f_2$ du faisceau amplifié $E_3$ durant la période de relaxation de durée $T'_R$. Pour autant que la durée de relaxation $T'_R$ reste sensiblement inférieure à la constante de temps $\tau$ du milieu non linéaire, cette diffraction génère un faisceau oscillateur local OL, à la fréquence de base $f_0 + \Delta f_2$.

Comme précédemment, l'oscillateur local OL et le faisceau rétroréfléchi $E'_1$ interfèrent sur le détecteur 12 pour fournir un signal de battement de fréquence égale à la différence de fréquence des signaux interférents, c'est-à-dire $\Delta f_1 - \Delta f_2 + f_D$. Ce signal de battement est modulé à la fréquence $\delta f_1$ puisque le faisceau photoinduit n'est pas modifié par inscription de la composante de fréquence $\delta f_1$, le temps d'excursion T étant sensiblement inférieur au temps de réponse $\tau$ du milieu non-linéaire utilisé (conformément à la relation (3)). La compression dans le module à lignes à retard fournit une impulsion dont l'instant de détection permet de mesurer la distance entre la cible et le télémètre. Si une ambiguïté de type distance-vitesse Doppler apparaît, il convient de réaliser une modulation à double rampe positive et négative, telle qu'évoquée précédemment. Ce mode de réalisation particulier permet d'augmenter la fiabilité des résultats obtenus par augmentation sensible du rapport signal/bruit, du fait des rapports de puissance mis en jeu entre la raie du faisceau de mesure et celle de l'harmonique du spectre de fréquences du faisceau de pompe.

L'invention n'est pas limitée aux exemples de réalisation décrits et représentés. Il est possible, par exemple, de remplacer la cavité d'amplification optique par un modulateur d'amplitude. D'autre part il est possible de réaliser, par balayage du faisceau de visée, une imagerie active pour visualiser en temps réel les paramètres de distances et de vitesses de cibles, ainsi que de réflectance du milieu environnant. La mesure de la réflectance permet de localiser les points brillants du fond environnant, ce qui permet de repérer en particulier les optiques pointées en direction de la station de référence. Une telle imagerie active peut également être obtenue en utilisant un détecteur matriciel à la place du détecteur hétérodyne mis en oeuvre.

Une autre application concerne l'anémométrie. Le télémètre selon l'invention peut en effet permettre de mesurer la fréquence Doppler due au déplacement des masses d'air environnants la station. Cette mesure est une donnée critique pour la balistique en conduite de tir.

### Revendications

**1.** Télémètre discret multifonctionnel, comprenant une source laser (1) émettant en continu un faisceau (E) à une fréquence fondamentale $f_0$ pour réaliser un oscillateur local (OL) et un détecteur (12), dans lequel le faisceau émis (E) est séparé pour former, d'une part, un faisceau de visée ($E_1$) dirigé vers une cible (K) située à une distance à déterminer et, d'autre part, un faisceau de pompe ($E_2$), caractérisé en ce que le faisceau de pompe est dirigé vers une cellule à milieu non-linéaire (10) présentant une constante de temps $\tau$, en ce que le faisceau de visée ($E_1$) est modulé en fréquence par introduction à un instant donné, à l'aide d'un module acousto-optique (3), d'une composante additionnelle de fréquence périodique $\delta f_1$ présentant une durée (T) sensiblement inférieure à la constante de temps $\tau$ et un temps de relaxation ($T_R$) supérieur à la constante de temps $\tau$, le faisceau de visée ($E_1$) étant rétrodiffusé par la cible (K) et dirigé sous la forme d'un faisceau de mesure ($E'_1$) vers la cellule à milieu non-linéaire (10), en ce que les fréquences du faiceau de pompe ($E_2$) et de visée ($E_1$) sont réglées l'une relativement à l'autre par au moins un module acousto-optique (3, 4) de sorte qu'un réseau d'indice mobile est photo-induit dans le milieu non-linéaire (10), en ce que le faisceau de pompe ($E_2$) diffracte sur ce réseau d'indice pour générer le faisceau oscillateur local (OL) qui interfère avec le faisceau de mesure ($E'_1$) sur le détecteur (12) pour délivrer, à un instant séparé de l'instant d'émission de la composante de modulation par une durée proportionnelle à la distance de la cible, un signal de battement (S) de fréquence sensiblement égale à la fréquence de modulation $\delta f_1$.

**2.** . Télémètre selon la revendication 1, caractérisé en ce que la fréquence de modulation $\delta f_1$ varie sous forme d'une rampe linéaire sur une durée d'excursion (T) couvrant un intervalle de fréquence ($\Delta f$) décrit autour d'une fréquence intermédiaire donnée ($f_i$), cette rampe étant périodiquement renouvelée après une période de relaxation ($T_R$) donnée.

**3.** Télémètre selon la revendication 1 ou 2, caractérisé en ce que le signal de battement (S) est comprimé par un module de compression (14), puis post-intégré à l'aide d'une carte de traitement (15), et appliqué à un boîtier électronique pour effectuer une chronométrie.

**4.** Télémètre selon la revendication 3, caractérisé en ce que le module de compression (14) comporte des lignes à retard dispersives formant un réseau semi-réfléchissant de pas variable.

**5.** Télémètre selon l'une quelconque des revendications précédentes, caractérisé en ce que les modules acousto-optiques (3,4) sont pilotés par un boîtier de commande (18) auquel est appliqué le signal (S) délivré par le détecteur (12).

**6.** Télémètre selon l'une des revendications précédentes, caractérisé en ce que, le faisceau de mesure ($E'_1$) présentant une composante fréquentielle Doppler $f_D$ lorsque la cible (K) possède une vitesse relative, les réglages en fréquence effectués par les modules acousto-optiques (3,4) permettent d'ajouter sur les faisceaux de mesure et de pompe ($E'_1$, $E_2$) une composante continue $\Delta f_1$ et $\Delta f_2$ de sorte que $|\Delta f_1 - \Delta f_2 + f_D|$ reste inférieur à $1/\tau$, ce qui permet de déduire une valeur correcte de la fréquence Doppler et donc celle de la vitesse de déplacement de la cible.

7. Télémètre selon la revendication 1, caractérisé en ce qu'une composante de fréquence $\delta f_2$ rapidement variable au regard de la constante de temps $\tau$ est introduite sur le faisceau de pompe ($E_2$) à l'aide du module acousto-optique (4) pendant la période de ralaxation ($T_R$) de la composante variable $\delta f_1$ introduite sur le faisceau de visée ($E_1$), la valeur de cette composante variable étant choisie de sorte qu'un seul réseau d'interférence créé dans le milieu non-linéaire (10) génère un réseau d'indice fixe lorsque la fréquence du faisceau de mesure ($E'_1$) appartient au domaine de fréquence balayé par le faisceau de pompe ($E_2$).

8. Télémètre selon la revendication 7, caractérisé en ce que la fréquence de modulation $\delta f_1$ du faisceau de visée ($E_1$) est à double rampe périodique accolée, de pentes respectivement positive et négative, de sorte que 2 signaux de battement apparaissent au niveau du détecteur (12) dont l'instant médian d'apparition et l'écart temporel donnent accès respectivement aux valeurs de la distance et de la vitesse de la cible.

9. Télémètre selon la revendication 1, caractérisé en ce qu'un amplificateur optique (19) est inséré entre le module acousto-optique (4) et la cellule à milieu non-linéaire (10) pour former le faisceau de pompe ($E_3$) par addition d'une composante d'amplification impulsionnelle en amplitude au faisceau de pompe de base ($E_2$), cette composante additionnelle présentant une période ($T_A$) pendant laquelle des impulsions ($I_A$) sont émises à une cadence $f_A$ inférieure à $1/\tau$, de sorte que le faisceau oscillateur local (OL) créé par diffraction du faisceau de pompe ($E_3$) sur un réseau d'indice photo-induit par une raie du faisceau de pompe ($E_3$) et la raie du faisceau de mesure ($E'_1$) possède une fréquence égale à celle du faisceau de pompe de base ($E_2$).

10. Télémètre selon la revendication 9, caractérisé en ce que l'amplificateur optique (19) est une Cavité Amplificatrice Optique.

11. Télémètre selon la revendication 9, caractérisé en ce que l'amplificateur optique (19) est un modulateur d'amplitude.

12. Télémètre selon l'une des revendications précédentes, caractérisé en ce que le faisceau de visée ($E_1$) est balayé pour réaliser une imagerie active permettant de déterminer des valeurs, de distance, de vitesse et de réflectance du milieu environnant.

13. Télémètre selon la revendication 12, caractérisé en ce que l'imagerie active est réalisée par l'utilisation d'un détecteur matriciel comme détecteur hétérodyne (12).

14. Télémètre selon l'une quelconque des revendications précédentes, caractérisé en ce qu'il est appliqué en anémotrie pour mesurer des déplacements des masses d'air environnants.

## Patentansprüche

1. Diskretes multifunktionales Entfernungsmeßgerät mit einer Laserlichtquelle (1), die kontinuierlich einen Strahl (E) mit einer Grundfrequenz $f_0$ emittiert, um einen örtlichen Oszillator (OL) zu bilden, und mit einem Detektor (12), wobei der emittierte Strahl (E) zur Bildung einerseits eines Sendestrahls ($E_1$), der auf ein in einer zu bestimmenden Entfernung liegendes Zielobjekt (K) gerichtet ist, und andrerseits eines Pumpstrahls ($E_2$) aufgeteilt ist, dadurch gekennzeichnet, daß der Pumpstrahl auf eine Zelle (10) mit nichtlinearem Milieu gerichtet ist, die eine Zeitkonstante $\tau$ hat, daß der Sendestrahl ($E_1$) durch eine zusätzliche Komponente mit periodischer Frequenz $\delta f_1$ frequenzmoduliert wird, indem diese Komponente in einem gegebenen Zeitpunkt mithilfe eines akusto-optischen Moduls (3) eingefügt wird und diese Komponente eine Dauer (T) deutlich unter der Zeitkonstante $\tau$ und eine Relaxationszeit ($T_R$) größer als diese Zeitkonstante $\tau$ besitzt, wobei der Sendestrahl ($E_1$) vom Zielobjekt (K) rückdiffundiert und in Form eines Meßstrahls ($E'_1$) zur Zelle mit nichtlinearem Milieu geführt wird, daß die Frequenzen des Pumpstrahls ($E_2$) und des Sendestrahls ($E_1$) zueinander durch mindestens einen akusto-optischen Modul (3, 4) so geregelt werden, daß ein bewegliches Indexgitter in dem nichtlinearen Milieu (10) lichtinduziert wird, daß der Pumpstrahl ($E_2$) an diesem Indexgitter gebeugt wird und den örtlichen Oszillatorstrahl (OL) erzeugt, der mit dem Meßstrahl ($E'_1$) auf dem Detektor (12) interferiert, um in einem Zeitpunkt, der vom Sendezeitpunkt der Modulationskomponente durch einen Dauer proportional zur Entfernung des Zielobjekts getrennt ist, ein Schwebungssignal (S) einer Frequenz von im wesentlichen gleich der Modulationsfrequenz $\delta f_1$ zu liefern.

**2.** Entfernungsmeßgerät nach Anspruch 1, dadurch gekennzeichnet, daß die Modulationsfrequenz $\delta f_1$ über die Exkursionsdauer (T) in Form einer linearen Rampe variiert, die ein Frequenzintervall ($\Delta f$) um eine gegebene mittlere Frequenz ($f_i$) überdeckt, wobei diese Rampe periodisch nach einer gegebenen Relaxationsperiode ($T_R$) erneuert wird.

**3.** Entfernungsmeßgerät nach Anspruch 1 oder 2, dadurch gekennzeichnet, daß das Schwebungssignal (S) durch einen Kompressionsmodul (14) komprimiert und dann mithilfe einer Verarbeitungskarte (15) nachintegriert wird, ehe es an eine elektronische Einheit zur Zeitmessung gelangt.

**4.** Entfernungsmeßgerät nach Anspruch 3, dadurch gekennzeichnet, daß der Kompressionsmodul (14) dispersive Verzögerungsleitungen enthält, die ein halbreflektierendes Gitter mit variablem Rasterabstand bilden.

**5.** Entfernungsmeßgerät nach einem beliebigen der vorstehenden Ansprüche, dadurch gekennzeichnet, daß die akusto-optischen Moduln (3, 4) durch eine Steuereinheit (18) gesteuert werden, an die das vom Detektor (12) gelieferte Signal (S) angelegt wird.

**6.** Entfernungsmeßgerät nach einem der vorstehenden Ansprüche, dadurch gekennzeichnet, daß, wenn der Meßstrahl (E'$_1$) eine Dopplerfrequenzkomponente $f_D$ im Fall einer Relativgeschwindigkeit des Zielobjekts (K) besitzt, die durch die akusto-optischen Moduln (3, 4) erfolgten Frequenzregelungen dem Meßstrahl (E'$_1$) und dem Pumpstrahl (E$_2$) eine kontinuierliche Komponente $\Delta f_1$ und $\Delta f_2$ so hinzufügen können, daß der Absolutwert $|\Delta f_1 - \Delta f_2 + f_D|$ unter dem Wert $1/\tau$ bleibt, wodurch ein korrekter Wert der Dopplerfrequenz und damit der Geschwindigkeit der Bewegung des Zielobjekts abgeleitet werden kann.

**7.** Entfernungsmeßgerät nach Anspruch 1, dadurch gekennzeichnet, daß eine im Vergleich zur Zeitkonstante $\tau$ rasch veränderbare Frequenzkomponente $\delta f_2$ in den Pumpstrahl (E$_2$) mithilfe des akusto-optischen Moduls (4) während der Relaxationsperiode ($T_R$) der auf dem Sendestrahl (E$_1$) angewandten variablen Komponente $\delta f_1$ aufgeprägt wird, wobei der Wert dieser variablen Komponente so gewählt wird, daß nur ein im nichtlinearen Milieu (10) erzeugtes Interferenzgitter ein festes Indexgitter erzeugt, wenn die Meßfrequenz (E'$_1$) zu dem durch den Pumpstrahl (E$_2$) überstrichenen Frequenzbereich gehört.

**8.** Entfernungsmeßgerät nach Anspruch 7, dadurch gekennzeichnet, daß die Modulationsfrequenz $\delta f_1$ des Sendestrahls (E$_1$) zwei periodisch aufeinanderfolgende Rampen mit positiver beziehungsweise negativer Steigung besitzt, sodaß zwei Schwebungssignale in Höhe des Detektors (12) auftreten, deren mittlerer Zeitpunkt des Auftretens beziehungsweise deren zeitlicher Abstand die Entfernung und die Geschwindigkeit des Zielobjekts zu ermitteln erlauben.

**9.** Entfernungsmeßgerät nach Anspruch 1, dadurch gekennzeichnet, daß ein optischer Verstärker (19) zwischen den akusto-optischen Modul (4) und die Zelle (10) mit nichtlinearem Milieu eingefügt ist und den Pumpstrahl (E$_3$) durch Hinzufügung einer impulsförmigen Amplituden-Verstärkungskomponente zum Basispumpstrahl (E$_2$) bildet, die eine Periode ($T_A$) besitzt, während der Impulse ($I_A$) mit einer Impulsfrequenz $f_A$ unter $1/\tau$ ausgesendet werden, sodaß der Strahl des örtlichen Oszillators (OL), der durch Beugung des Pumpstrahls (E$_3$) an einem durch eine Spektrallinie des Pumpstrahls (E$_3$) und die Spektrallinie des Meßstrahls (E'$_1$) lichtinduzierten Indexgitter erzeugt wird, eine Frequenz gleich der des Pumpstrahls (E$_2$) besitzt.

**10.** Entfernungsmeßgerät nach Anspruch 9, dadurch gekennzeichnet, daß der optische Verstärker (19) eine optische Verstärkungskavität ist.

**11.** Entfernungsmeßgerät nach Anspruch 9, dadurch gekennzeichnet, daß der optische Verstärker (19) ein Amplitudenmodulator ist.

**12.** Entfernungsmeßgerät nach einem der vorstehenden Ansprüche, dadurch gekennzeichnet, daß der Sendestrahl (E$_1$) geschwenkt wird, um ein aktives Bild zu realisieren, mit dem Werte der Entfernung, der Geschwindigkeit und des Reflexionsvermögens des umgebenden Milieus bestimmt werden können.

**13.** Entfernungsmeßgerät nach Anspruch 12, dadurch gekennzeichnet, daß das aktive Bild durch Verwendung eines matrixartigen Detektors als Heterodyndetektor (12) realisiert wird.

**14.** Entfernungsmeßgerät nach einem beliebigen der vorstehenden Ansprüche, dadurch gekennzeichnet, daß es auf die Windmessung angewendet wird, indem die Verschiebungen der umgebenden Luftmassen gemessen werden.

**Claims**

**1.** Multifunctional, inconspicuous distance measuring apparatus, comprising a laser source (1) which continuously emits a beam (E) at a fundamental frequency $f_0$ so as to produce a local oscillator (OL) and a detector (12), wherein the emitted beam (E) is separated so as to form, on the one hand, a sighting beam ($E_1$) directed at a target (K) situated at a distance that is to be determined, and, on the other hand, a pump beam ($E_2$), characterised in that said pump beam is directed at a cell having a non-linear medium (10) presenting a time constant $\tau$, that the sighting beam ($E_1$) is frequency modulated by introducing at a given point in time, with the help of an acousto-optical module (3), an additional periodic frequency component $\delta f_1$ presenting a substantially lesser duration (T) than the time constant $\tau$ and a relaxation time ($T_R$) greater than the time constant $\tau$, the sighting beam ($E_1$) being backscattered by the target (K) and directed in the form of a measuring beam ($E'_1$) at the cell having a non-linear medium (10), that the frequencies of the pump beam ($E_2$) and sighting beam ($E'_1$) are adjusted with respect to one another by at least one acousto-optical module (3, 4) in such a way that a moving index network is photo-induced in the non-linear medium (10), that the pump beam ($E_2$) diffracts onto this index network so as to generate the local oscillator beam (OL) which heterodynes with the measuring beam ($E'_1$) on the detector (12) in order to deliver, at a point in time separated from the point in time of emission of the modulation component by a duration proportional to the distance of the target, a beat signal (S) of a frequency substantially equal to the modulation frequency $\delta f_1$.

2. Distance measuring apparatus according to claim 1, characterised in that the modulation frequency $\delta f_1$ varies in the form of a linear ramp over a duration of excursion (T) covering a frequency interval ($\Delta f$) described about a given intermediate frequency ($f_i$) said ramp being periodically renewed after a given relaxation period ($T_R$).

3. Distance measuring apparatus according to claim 1 or 2, characterised in that the beat signal (S) is compressed by a compression module (14), then post-integrated with the help of a processing card (15), and applied to an electronic unit in order to carry out a timing exercise.

4. Distance measuring apparatus according to claim 3, characterised in that the compression module (14) has dispersive delay lines which form a semi-reflective network with variable spacing.

5. Distance measuring apparatus according to any of the preceding claims, characterised in that the acousto-optical modules (3, 4) are master-controlled by a control panel (18) to which the signal (S) delivered by the detector (12) is applied.

6. Distance measuring apparatus according to any of the preceding claims, characterised in that, as the measuring beam ($E'_1$) presents a Doppler frequency component $f_D$ whenever the target (K) has a relative velocity, the frequency adjustments carried out by the acousto-optical modules (3, 4) make it possible to add to the measuring and pump beams ($E'_1$, $E_2$) a continuous component $\Delta f_1$ and $\Delta f_2$ such that $|\Delta f_1 - \Delta f_2 + f_D|$ remains less than $1/\tau$, thereby enabling a correct Doppler frequency value and hence that of the target displacement velocity to be deduced.

7. Distance measuring apparatus according to claim 1, characterised in that a rapidly variable frequency component 6f2 in relation to the time constant $\tau$ is introduced onto the pump beam ($E_2$) with the help of the acousto-optical module (4) during the relaxation period ($T_R$) of the variable component $\delta f_1$ introduced onto the sighting beam ($E_1$), the value of said variable component being chosen in such a way that a single heterodyning network created in the non-linear medium (10) generates a fixed index network whenever the frequency of the measuring beam ($E'_1$) belongs to the frequency domain scanned by the pump beam ($E_2$).

8. Distance measuring apparatus according to claim 7, characterised in that the modulation frequency $\delta f_1$ of the sighting beam ($E_1$) is of the bracketed periodic double ramp type, having respectively positive and negative slopes, such that 2 beat signals appear on the detector (12) of which the medial instant of appearance and the temporal variation give access respectively to the target's distance and velocity values.

9. Distance measuring apparatus according to claim 1, characterised in that an optical amplifier (19) is inserted between the acousto-optical module (4) and the cell with the non-linear medium (10) so as to form the pump beam ($E_3$) by the addition of an amplitude pulse amplifying component to the basic pump beam ($E_2$), this additional component presenting a period ($T_A$) during which pulses ($I_A$) are emitted at a rate $f_A$ less than $1/\tau$, such that the local oscillator beam (OL) created by diffraction of the pump beam ($E_3$) over a photo-induced index network by a line of the pump beam ($E_3$) and the measuring beam ($E'_1$) has a frequency equal to that of the basic pump beam ($E_2$).

10. Distance measuring apparatus according to claim 9, characterised in that the optical amplifier (19) is an Optical Amplifying Cavity.

11. Distance measuring apparatus according to claim 9, characterised in that the optical amplifier (19) is an amplitude modulator.

12. Distance measuring apparatus according to any of the preceding claims, characterised in that the sighting beam ($E_1$) is scanned in order to produce active imaging which makes it possible to determine distance, velocity and reflectance values of the surrounding medium.

13. Distance measuring apparatus according to claim 12, characterised in that the active imaging is produced by the use of a matrix-type detector as the heterodyne detector (12).

14. Distance measuring apparatus according to any of the preceding claims, characterised in that it is employed in anemometry to measure displacements of surrounding air masses.

FIG.1

EP 0 720 028 B1

FIG.2

FIG.3

FIG.4

FIG.5

EP 0 720 028 B1